(19) Europäisches Patentamt

European Patent Office

Office européen des brevets

(11) **EP 1 249 945 A2**

(12) **EUROPEAN PATENT APPLICATION**

(43) Date of publication:
**16.10.2002  Bulletin 2002/42**

(51) Int Cl.⁷: **H04B 1/38**

(21) Application number: **02396046.1**

(22) Date of filing: **08.04.2002**

| | |
|---|---|
| (84) Designated Contracting States:<br>**AT BE CH CY DE DK ES FI FR GB GR IE IT LI LU<br>MC NL PT SE TR**<br>Designated Extension States:<br>**AL LT LV MK RO SI**<br><br>(30) Priority: **12.04.2001  FI   20010779**<br><br>(71) Applicant: **Nokia Corporation<br>02150 Espoo (FI)**<br><br>(72) Inventors:<br>  • **Ranta, Pekka A.<br>   03100 Nemmela (FI)** | • **Escartin, Marco<br>  02320 Espoo (FI)**<br>• **Berg, Heikki<br>  33820 Tampere (FI)**<br>• **Päivike, Heikki<br>  90440 Kempele (FI)**<br><br>(74) Representative: **Antila, Harri Jukka Tapani<br>Kolster Oy Ab,<br>Iso Roobertinkatu 23<br>00120 Helsinki (FI)** |

(54) **Method for increasing data transmission rate, and receiver, transmitter and terminal**

(57) The invention relates to a terminal, a terminal unit, a method, a receiving unit and transmitting unit. The terminal unit comprises a main receiver (300) and at least one auxiliary receiver. At least one auxiliary receiver (302) is connected to function as a receiving unit, which the main receiver (300) controls by controlling means (216, 320). At least one auxiliary receiver (302) comprises means (312, 314, 316, 318, 322a, 322b, 322c, 322d) for supplying a signal received by it to processing by the main receiver and/or the terminal unit comprises a main transmitter (600) and at least one auxiliary transmitter (602). The main transmitter (600) and at least one auxiliary transmitter (602) are connected to function as a transmitting unit, which the main transmitter (600) controls by controlling means (216, 620).

Fig. 3

EP 1 249 945 A2

**Description**

FIELD OF THE INVENTION

The invention relates to a method for increasing the data transmission rate in a radio telecommunications system or improving the quality of data transmission, and to a receiving unit of a terminal or a terminal unit, a transmitting unit of a terminal or a terminal unit, and a terminal or a terminal unit.

BACKGROUND OF THE INVENTION

The requirements set on telecommunications have increased as people have adopted a more mobile lifestyle. This has created a need for wireless data connections which enable implementation of more and more demanding applications, such as high-rate data transmission, Internet connections and even transmission of video pictures. It is common to these applications that they usually require high data transmission rates. This often causes problems in radio telecommunications systems because the transmission quality also needs to meet high requirements for the system to function at all. To put it simply, the following principle applies to radio connections: if transmission rates ate to be raised, the transmission power or the bandwidth has to be increased, too. However, the power increase causes more interference to other users of the system or to other systems. The increase of bandwidth, on the other hand, is restricted by the lack of radio frequencies.

To solve the problem, use of adaptive antennas has been devised. The power of an antenna can be directed in the desired direction using different beam-forming methods. In base stations, application of adaptive antennas is a relevant alternative because the space required by an antenna array consisting of several antenna elements is not a problem. In subscriber terminals, however, the situation is different because the size and weight of the device are essential to its usability and competitiveness. Implementation of an adaptive antenna is particularly problematic in terminals designed to function in various systems or in multicarrier systems. It should also be noted that in consumer electronic appliances, in which subscriber terminals of radio telecommunications systems are included, the appearance of the device is a significant factor; it is very difficult to include an antenna array in a terminal so that it is unnoticeable.

BRIEF DESCRPITION OF THE INVENTION

The object of the invention is to provide an improved method for increasing the transmission rate in a radio telecommunications system. This is achieved with a method for increasing the transmission rate in a telecommunications system or improving the quality of data transmission by connecting the main receiver and at least one auxiliary receiver to function as a receiving unit, which the main receiver controls, receiving a radio signal both by the main receiver and at least one auxiliary receiver, supplying the signal received by at least one auxiliary receiver to processing by the main receiver and/or connecting the main transmitter and at least one auxiliary transmitter to function as a transmitting unit, which the main transmitter controls, transmitting a radio signal both by the main transmitter and at least one auxiliary transmitter.

The invention also relates to a terminal or a terminal unit. A terminal or a terminal unit of the invention suitable for a radio telecommunications system comprises a main receiver and at least one auxiliary receiver, the main receiver and at least one auxiliary receiver being connected to function as a receiving unit, which the main receiver controls by controlling means, at least one auxiliary receiver comprises means for supplying the signal received by it to processing by the main receiver, and/or the terminal or the terminal unit comprises a main transmitter and at least one auxiliary transmitter, the main transmitter and at least one auxiliary transmitter being connected to function as a transmitting unit, which the main transmitter controls by controlling means.

The invention further relates to a receiving unit of a terminal or a terminal unit suitable for a radio telecommunications system, the receiving unit comprising a main receiver and at least one auxiliary receiver, the main receiver and at least one auxiliary receiver being connected to function as a receiving unit, which the main receiver controls by controlling means, at least one auxiliary receiver comprising means for supplying the signal received by it to processing by the main receiver.

The invention also relates to a transmitting unit of a terminal or a terminal unit suitable for a radio telecommunications system, the terminal or the terminal unit comprising a main transmitter and at least one auxiliary transmitter, the main transmitter and at least one auxiliary transmitter being connected to function as a transmitting unit, which the main transmitter controls by controlling means.

The preferred embodiments of the invention are disclosed in the dependent claims.

The invention is based on the idea that the transmitting unit of a terminal in a radio telecommunications system comprises a main transmitter, which controls the transmitting unit, and an auxiliary transmitter, and/or the receiving unit of the terminal comprises a main receiver, which controls the receiving unit, and an auxiliary receiver. The auxiliary transmitter is connected to the main transmitter via an interface. The auxiliary receiver is also connected to the main receiver via an interface. The components included in the auxiliary transmitter or in the auxiliary receiver vary depending on the application.

The method and system of the invention provide several advantages. By means of the solution according to the invention the transmission rate of a radio telecommunications system can be raised without increasing the bandwidth or causing interference. The receiver's immunity to interference will also improve, and thus the cell size, for example, can be increased. The method and system according to the invention also improve the quality of data transmission. The terminal or the terminal unit, the receiver and the transmitter according to the invention can be designed to correspond better to the market requirements, i.e. the requirements for small and light devices. Furthermore, the auxiliary receiver is necessary in multislot reception

where monitoring of several slots for handover would otherwise be impossible. The method and system of the invention also enable utilization of multicarrier transmission and reception.

BRIEF DESCRIPTION OF THE DRAWINGS

The invention will be described more closely by means of preferred embodiments with reference to the accompanying drawings, in which

Figure 1 illustrates an example of a telecommunications system,
Figure 2 illustrates an example of a terminal,
Figure 3 illustrates an example of a receiver,
Figure 4 is a block diagram illustrating a structure of an IRC receiver,
Figure 5 is a flow chart illustrating the steps of a method of increasing the transmission rate in a radio telecommunications system,
Figure 6 illustrates an example of a transmitter.

DETAILED DESCRIPTION OF THE INVENTION

The present invention can be employed in various wireless communications systems, such as cellular radio systems. It is irrelevant which multiple access method is used. For example, the CDMA (Code Division Multiple Access), the WDCMA (Wideband Code Division Multiple Access) and the TDMA (Time Division Multiple Access) or their hybrids can be used. It is also clear to a person skilled in the art that the method according to the invention can be applied to systems utilizing different modulation methods or air interface standards.

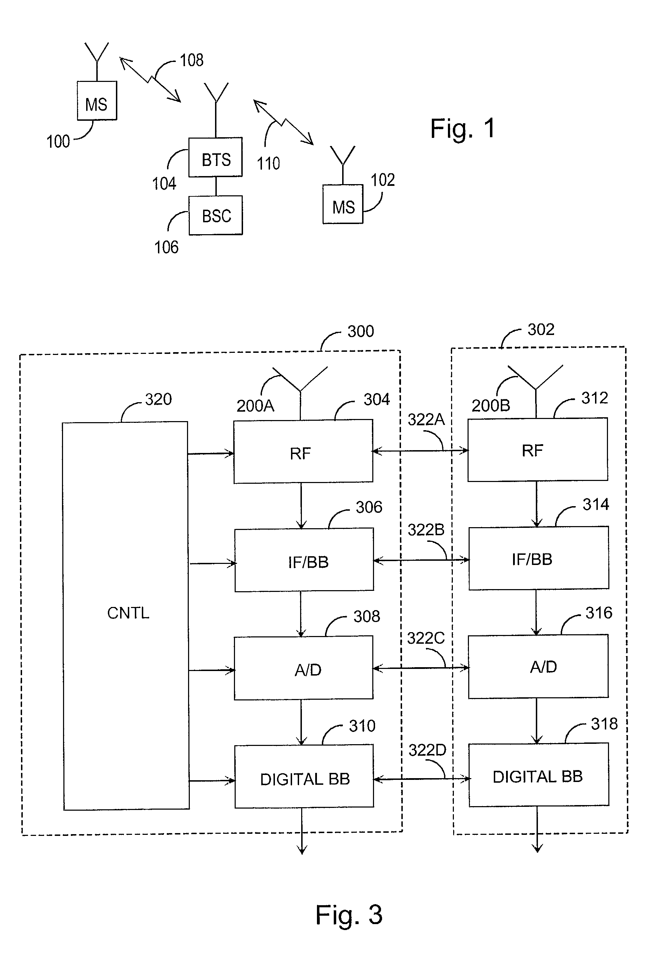

Figure 1 is a simplified illustration of a digital data transmission system in which the solution according to the invention is applicable. This is part of a cellular radio system, which comprises a base station 104, which has a bi-directional connection 108 and 110 to subscriber terminals 100 and 102, which may be fixed, placed in a vehicle or portable. The base station includes transmitters, for instance. From the transceivers of the base station there is a connection to an antenna unit, which establishes a bi-directional radio link to the subscriber terminal. The base station is further connected to a base station controller 106, which transmits the connections of the terminals to the other parts of the network. The base station controller controls centrally several base stations connected to it.

The cellular radio system can also communicate with a public switched telephone network, in which case a transcoder converts the different digital coding formats of speech used between the public switched telephone network and the cellular radio network into compatible formats.

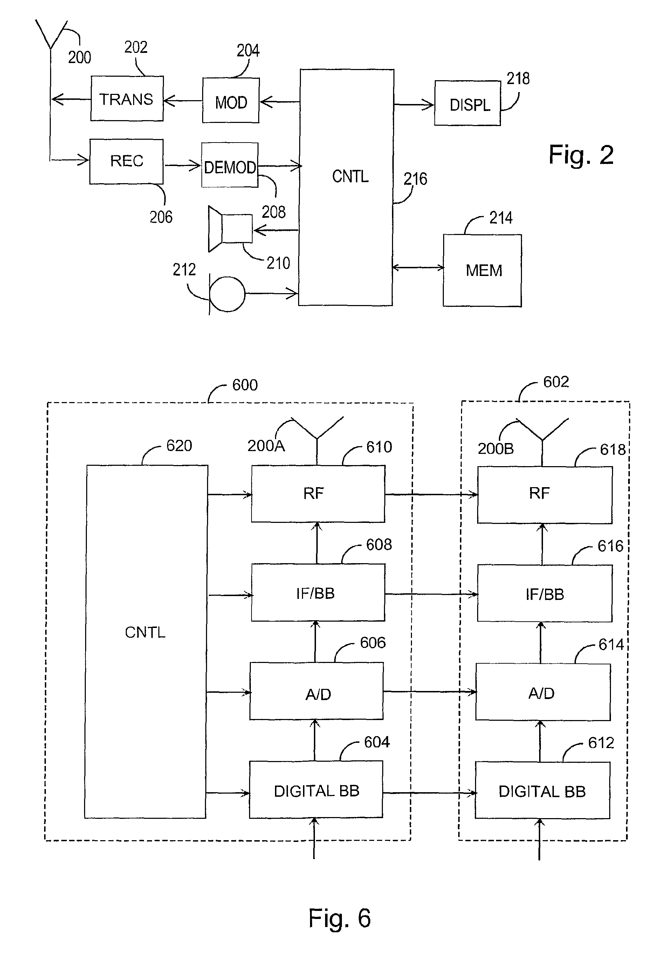

Figure 2 illustrates one terminal or a terminal unit of a wireless communications system, such as a cellular radio system, in which the method of the invention can be applied. Both the auxiliary receivers and the auxiliary transmitters can be either in the same casing as the terminal or outside the casing of the terminal. If the auxiliary receivers and/or auxiliary transmitters are in a different casing than the terminal, they are connected to the terminal typically with a cable, a radio link, an infrared link or a galvanic connection, thus forming a terminal unit with the terminal.

The terminal or the terminal unit can be, for example, a portable phone, a card phone or a microcomputer without being limited to these. The above-mentioned terminal or the terminal unit comprises an antenna 200, by means of which signals are usually both transmitted and received via a duplex filter. The transmitter and the receiver may also have separate antennas, in which case no duplex filter is needed. The figure only shows one antenna, but each receiving unit preferably has separate antennas for the main receiver and the auxiliary receiver. Correspondingly, each transmitting unit preferably also includes separate antennas for the main transmitter and the auxiliary transmitter. The terminal or the terminal unit can comprise e.g. two receivers, i.e. a main receiver and an auxiliary receiver, and one transmitter, or one receiver and two transmitters (main transmitter and auxiliary transmitter). There can be several auxiliary receivers and/or auxiliary transmitters. Furthermore, the auxiliary receiver or the auxiliary transmitter can be separate auxiliary devices or included in a car installation kit, for instance. The auxiliary receiver and the auxiliary transmitter can also be attached to the battery or to the bottom of the phone, for example. In addition, the auxiliary receiver and the auxiliary transmitter can be implemented as one or more card modules which can be inserted into the terminal via an opening provided for a card. Consequently, the number of antennas in the terminal varies depending on the application and/or implementation.

The terminal or the terminal unit comprises a transmitter 202, which amplifies a modulated signal and transmits it to the antenna. The transmitter 202 is a transmitting unit which comprises a main transmitter and an auxiliary transmitter. There can be several auxiliary transmitters. The transmitting unit 202 is controlled by the main transmitter, which typically comprises a separate controlling block, but can also utilize a controlling block 216 of the terminal. If the transmitting unit, i.e. the main transmitter and the auxiliary transmitter, transmits the same signal, both transmitters are tuned to the same frequency and in the TDMA systems, for example, to the same time slot, too. The transmitting unit also comprises e.g. D/A converters, which convert a digital signal into an analogue signal, and filters which in systems with a limited bandwidth restrict the bandwidth of the output. Which transmitter components, such as amplifiers, D/A converters and filter, or operations, such as various baseband operations, are common to both transmitters and which are separate varies depending on the application and/or implementation.

The terminal or the terminal unit also comprises a modulator 204, which modulates the carrier wave with a data signal including the desired information according to the desired modulation method. The modulator 204 can also be included in the transmitting unit, in which case only the main transmitter includes a modulator, or both the main transmitter and the auxiliary transmitter have modulators of their own.

The terminal or the terminal unit further comprises a receiver 206, which amplifies a signal arriving from the antenna and down-converts it to a selected intermediate frequency or directly to the baseband. The receiver 206 is a receiving unit which comprises a main receiver and an auxiliary receiver. There can be several auxiliary receivers. The receiving unit is controlled by the main receiver, which typically comprises a separate controlling block, but can also utilize a controlling block 216 of the terminal. If the main receiver and the auxiliary receiver receive the same signal, they are tuned to the same frequency and in the TDMA systems, for example, to the same time slot, too. The receiving unit also comprises e.g. A/D converters, which convert an analogue signal into a digital signal by sampling and quantisizing a baseband signal, and filters, which filter out frequencies outside the desired frequency band. Which receiver components, such as amplifiers, A/D converters and filters, or operations, such as various baseband operations, are common to both transmitters and which are separate varies depending on the application and/or implementation.

The terminal or the terminal unit also comprises a demodulator 208, which demodulates a received signal so that a data signal can be separated from the carrier wave. The demodulator 208 can also be included in the receiving unit 206 and thus be in the main receiver or both in the main receiver and in the auxiliary receiver.

The controller part 216 of the terminal comprises e.g. controlling and calculation means for controlling the operation of the different parts of the terminal and means for processing the user's speech or the data generated by the user, such as a DSP processor (Digital Signal Processing), which comprises e.g. channel equalizing operations for compensating for the interference caused in the signal by the radio channel employing information obtained on the channel by means of a training sequence, and coding and decoding means which perform both channel coding and speech coding. In channel coding, systematic bit redundancy added to the signal, typically parity bits, is used for error detection and correction in the decoder. In speech coding, non-systematic redundancy is typically removed from the source symbols to reduce the bit rate required. Furthermore, in spread-spectrum systems, such as the WCDMA, the signal spectrum is spread onto a broad band in the transmitter using a pseudo-random spreading code, and in the receiver it is compiled to increase the channel capacity. Coding can also be used for encrypting the output or the information included therein.

In addition, in devices according to the GSM system the controller part typically comprises burst-forming means, which add tail bits of a burst and training sequence to data arriving from the channel codec. The controller part also comprises means for adapting the signal to be transmitted and signaling information to correspond to the air interface standard of the cellular radio system in use. The terminal or the terminal unit described above is a terminal or a terminal unit of a digital cellular radio system, but the invention can also be applied in an analogue system in the corresponding manner.

The user interface of the terminal comprises a loudspeaker or an earpiece 210, a microphone 212, a display 218 and possibly a keypad, which are connected to the controller part. The terminal or the terminal unit also comprises different memory elements which are illustrated as one functional block 214. The memory element includes a program for controlling the function of the terminal, for example.

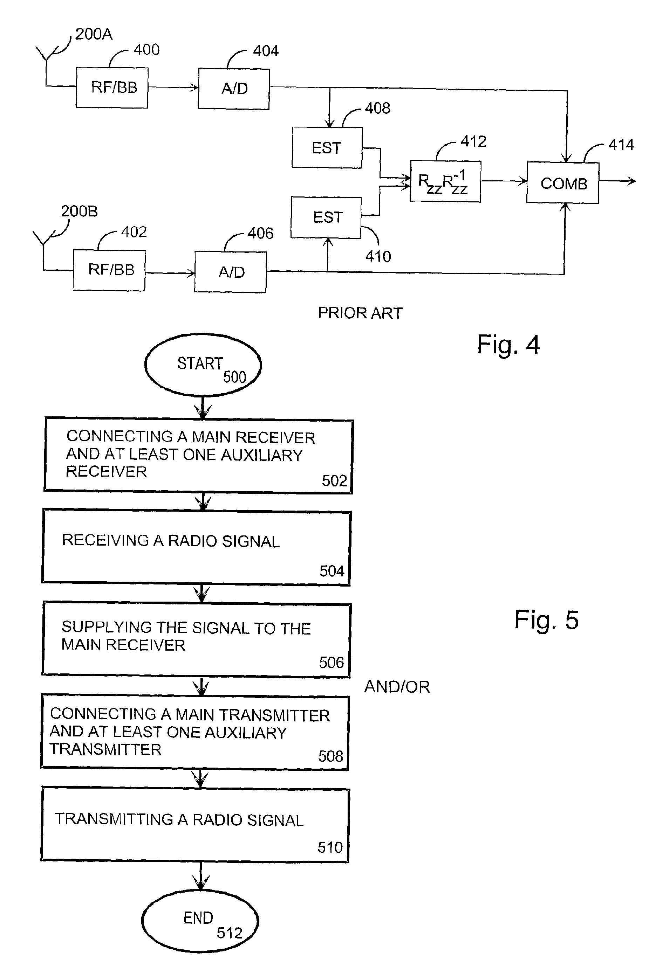

In the following, an example of the structure of the receiving unit will be described in greater detail by means of the block diagram shown in Figure 3. It should be noted that the main receiver and one or more auxiliary receivers can be tuned to receive the same carrier wave frequency or different carrier wave frequencies when multicarrier reception is in use. If the auxiliary receiver receives a different frequency than the main receiver, signalling or measuring of neighbouring cells, for example, can be performed simultaneously with the actual reception. Figure 3 illustrates part of a receiving unit, which comprises a main receiver 300 and an auxiliary receiver 302. Unlike in the figure, there can be several auxiliary receivers. The main receiver includes an antenna 200a, radio frequency parts 304 for filtering and amplifying a received signal, intermediate frequency/baseband parts 306 for down-converting the signal to an intermediate frequency or directly to the baseband, an A/D converter 308 which samples and quantizes an analogue signal, and digital baseband parts 310 where a received signal is demodulated, for example. From the digital baseband parts the signal is supplied to detection. It should be noted that the main receiver can comprise the above-mentioned parts or only e.g. a digital signal processing processor, in which case one or more auxiliary receivers are responsible for other reception functions. The radio frequency parts, for example, can thus be located only in the auxiliary receiver.

The auxiliary receiver 302 comprises an antenna 200b of its own as well as radio frequency parts 312, intermediate frequency/baseband parts 314, an A/D converter 316 and digital baseband parts 318 of its own or some of these. The parts of the auxiliary receiver vary depending on the application. The auxiliary receiver may thus comprise only radio frequency parts of its own, after which a signal received by the auxiliary receiver is supplied to the intermediate frequency/baseband parts of the main receiver. In addition to the radio frequency parts, the auxiliary receiver may comprise intermediate frequency/baseband parts, in which case a down-converted signal is supplied to the main receiver for A/D conversion, or the auxiliary receiver also comprises an A/D converter in addition to the above-mentioned parts. Furthermore, the auxiliary receiver can comprise signal processing operations, e.g. channel estimation and channel equalization, an interleaver and/or a decoder. Which operations are included in the auxiliary receiver depends on the application and/or implementation, e.g. on the data transmission rate of the transmission path and the interface and on the processing capacity of the main receiver. The auxiliary receiver can also include more operations than are utilized at a given time. In respect of the capacity the best alternative is to supply the received signal from the auxiliary receiver to the main received immediately after the A/D conversion, but in that case the transmission rate required and the loading of the processor of the main receiver are maximal. If the signal is transferred from the auxiliary receiver to the main receiver after the decoder, the transmission rate required is the slowest, but at the same time the capacity decreases.

The main receiver 300 controls the function of the auxiliary receiver either by employing the controller 216 of the terminal or its own control block 320, which can be a separate block implemented as ASIC (Application Specific Integrated Circuit), for example, or included in digital baseband parts 310. The main receiver 300 typically informs the auxiliary receiver 302 of the reception frequency e.g. by giving a channel number, orders switching on and off of the auxiliary receiver 302 or orders amplification of the auxiliary receiver 302. The main receiver can also determine which operation of the auxiliary receiver is used at a given time, i.e. after which functional blocks of the auxiliary receiver the received signal is supplied to the main receiver. Consequently, the auxiliary receiver can comprise more functional blocks than are utilized at a given time. It is not necessary to employ all functional blocks of the auxiliary transmitter, but only the blocks needed each time can be used. The phase in which the signal is transmitted to the main receiver depends e.g. on the signal processing capacity of the main receiver or on the delay tolerance of the system or the service. Other kind of controlling is also feasible.

The auxiliary receiver 302 can be taken into use when needed, preferably for fast data transmission. The auxiliary can, exactly like the main receiver, also comprise functions other than those mentioned above, e.g. interference estimation.

The auxiliary receiver or the desired operations, such as baseband operations or digital signal processing operations can be included in the same terminal as the main receiver, e.g. as a circuit card or as ASIC, or the auxiliary receiver can be a separate device, which can be included e.g. in the car installation kit, battery or desktop stand of the terminal, or a terminal, which comprises only the necessary parts of the receiver, for example. If the auxiliary receiver is separate from the main receiver, the interface 322a, 322b, 322c, 322d between the auxiliary receiver and the main receiver is typically implemented by a cable, a radio link, an infrared link or a galvanic connection. The radio link can be implemented by the bluetooth solution, for instance. It depends on the application and/or implementation which one or ones of the interfaces 322a, 322b, 322c, 322 are implemented.

In the following, one feasible way of combining signals of the main receiver and the auxiliary receiver into one received signal which is supplied to detection will be described by means of Figure 4. Figure 4 illustrates a prior art IRC receiver (Interference Rejection Combining) suitable for the TDMA system. According to the prior art, IRC receivers have been used in diversity reception where receivers are equal to each other, i.e. there is no dominant main receiver and no auxiliary receiver subordinate to the main receiver. Where applicable, the structure of the IRC receiver and the IRC algorithm can also be applied in a receiving unit consisting of a main receiver and an auxiliary receiver controlled by the main receiver. In IRC reception signals from different antennas are typically combined after A/D conversion. Interference attenuation is based on spatial whitening of the interference signal between antennas. It can be implemented by a pre-filter before the detector or integrated into calculation of detection metrics. Other prior art combination methods include a CCIC algorithm (CoChannel Interference Cancellation) where a signal from several antennas is filtered by a combined space-time filter whose coefficients have been selected to maximize the combined signal-to-noise ratio and signal-to-interference ratio, i.e. the SNIR, in the filter output. It is also possible to maximize only the signal power or minimize the combined interference-to-noise power. Furthermore, estimation algorithms can be used, particularly when signals from different antennas are combined analogously before A/D conversion.

The IRC receiver comprises two antennas 200a, 200b and two radio frequency/baseband parts 400, 402. The analogue side of the receiver is implemented e.g. as a superheterodyne receiver solution. The IRC receiver further comprises two A/D converters 404, 406 and two channel equalizers 408, 410. The channel equalizers 408, 410 determine independently the interference estimates of both branches. The interference estimates are supplied to block 412, which uses them to determine coefficients for the interference whitening filter. In a combining block 414 digitized signals that have been received are filtered. The output of the combining block is supplied to detection.

In the following, the IRC algorithm will be described more closely. First the signal model of the telecommunications system used is determined. It is assumed that the system comprises M antennas and R samples per symbol. In that case the received signal samples can be detected as follows:

$$r_k = H_k a_k + n_k \qquad (1)$$

where
sub-index k = symbol index
$n_k$ = noise sample vector
$H_k$ = channel matrix when N signals of a channel with the same frequency have been superimposed in the receiver,
$a_k$ = includes L+1 (where L is an integer) symbols transmitted last from each channel with the same frequency.

A received signal, which corresponds to the $k^{th}$ symbol transmitted, can be detected as follows:

$$\mathbf{r}_k = \begin{bmatrix} \mathbf{H}_k^{(1,1)} & \cdots & \mathbf{H}_k^{(1,N)} \\ \vdots & \ddots & \vdots \\ \mathbf{H}_k^{(M,1)} & \cdots & \mathbf{H}_k^{(M,N)} \end{bmatrix} \mathbf{a}_k + \mathbf{n}_k \quad . \qquad (2)$$

The above matrix (2) can be divided into two matrices, of which the first one comprises a payload signal and the second N-1 interference signals and which can be expressed as follows

$$r_K = H'_k a_k^{(1)} + z_k + n_k \qquad (3)$$

where
$H'_k$ = impulse response of the desired signal in matrix form,
$a_k$ = L+1 (where L is an integer) previous payload signal symbols in vector form,
$z_k$ = interference consisting of M R interference signal samples received from each antenna of the system,
$n_k$ = noise sample vector.

Interference which is not distributed equally can be regarded as spatially coloured noise, which has a correlation matrix

$$R_{zz} = E\{z_k z_k^H\} \qquad (4)$$

where E is the expected value and $[\,]^H$ is the Hermite matrix.

The coefficients of the interference whitening filter can be determined by means of the correlation matrix in block 412.

Figure 5 is a flow chart illustrating method steps for increasing the data transmission rate in a radio telecommunications system. The method starts in block 500. In block 502 the main receiver and at least one auxiliary receiver are connected to function as a receiving unit, which is controlled by the main receiver. The auxiliary receiver and the main receiver can be located in the same terminal or separately. The receivers are connected to each other typically by a cable, a radio link, an infrared link or a galvanic connection. In block 504 a radio signal is received both by the main receiver and by at least one auxiliary receiver. The receivers can receive either the same carrier wave or different carrier waves. Next in block 506 the signal received by at least one auxiliary receiver is supplied to the main receiver for processing. The operations carried out by the auxiliary receiver, such as A/D conversion or signal amplification, vary according to the application. In block 508 the main transmitter and at least one auxiliary transmitter are connected to function as a transmitting unit, which the main transmitter controls. The auxiliary transmitter and the main transmitter can be located in the same terminal or separately. The transmitters are typically connected to each other by a cable, a radio link, an infrared link or a galvanic connection. In block 510 a radio signal is transmitted both by the main transmitter and by at least one auxiliary transmitter. The main transmitter can process the signal transmitted by both the main transmitter and the auxiliary transmitter to maximize radio link performance. The reception and transmission methods described above can be applied together or separately. The method ends in block 512.

In the following, one structure of the transmitter will be described by means of Figure 6. It should be noted that the main transmitter and at least one auxiliary transmitter can be tuned to the same transmission frequency or to different transmission frequencies when multicarrier transmission is used. If the main transmitter and the auxiliary transmitter are tuned to different frequencies, signalling information can be transmitted simultaneously with speed or data, for example. Figure 6 shows only part of a transmitting unit which comprises a main transmitter 600 and an auxiliary transmitter 602. Unlike in the figure, there can be several auxiliary transmitters. The main transmitter 600 comprises digital baseband parts 604 in which the signal to be transmitted is modulated, for example, a D/A converter 606 which converts a digital signal into an analogue signal, i.e. into a suitable format for the radio path, intermediate frequency/baseband parts 606 in which the signal is up-converted from the intermediate frequency or from the baseband into the transmission frequency 608, radio frequency parts 610 in which the signal to be transmitted is filtered and amplified, and an antenna 200a. The main transmitter may also comprise only some of the above-mentioned functional blocks.

The auxiliary transmitter 602 comprises digital baseband parts 612, a D/A converter 614, intermediate frequency/baseband parts 616 or some of these and preferably an antenna 200b of its own. The parts of the auxiliary transmitter vary depending on the application. For example, the auxiliary transmitter can thus comprise only radio frequency parts to which the signal to be transmitted is supplied from the main transmitter.

The main transmitter and the auxiliary transmitted can function together so that the main transmitter adapts the signals to be transmitted to one another to maximize link performance. This can be implemented e.g. by utilizing interaction of the signals to be transmitted in beam forming. Space-time coding can also be employed.

The main transmitter 600 controls the function of the auxiliary transmitter either by using the controller 216 of the terminal or its own the control block 620, which can be a separate block implemented e.g. as ASIC (Application Specific Integrated Circuit) or included in the digital baseband parts 604 of the main transmitter. The main transmitter 600 informs the auxiliary transmitter 602 of the transmission frequency e.g. by giving a channel number, orders the switching on and off of the auxiliary transmitter 602 or orders amplification of the auxiliary transmitter 602. The main transmitter can also determine which functions of the auxiliary transmitter are utilized at a given time. Thus it is not necessary to utilize all functional blocks of the auxiliary transmitter but only the blocks needed each time can be used. Other kind of controlling is also feasible. The auxiliary transmitter 602 can be introduced when needed. The auxiliary transmitter can also comprise other functions exactly like the main receiver.

The auxiliary transmitter or the desired operations can be included in the same terminal as the main receiver, e.g. as a circuit card or as ASIC, or the auxiliary transmitter can be separate device, which can be included e.g. in the car installation kit, battery or desktop stand of the terminal, or a terminal, which comprises only the necessary functional blocks of the transmitter, for example. If the auxiliary transmitter is separate from the main receiver, the interface between the auxiliary transmitter and the main transmitter is typically implemented by a cable, a radio link, a bluetooth solution, an infrared link or a galvanic connection.

Even though the invention has been described above with reference to the example according to the accompanying drawings, it is clear that the invention is not limited thereto but may be modified in various ways within the scope of the inventive concept disclosed in the accompanying claims.

## Claims

1. A terminal or a terminal unit suitable for a radio telecommunications system,
   **characterized in that**
   the terminal or the terminal unit comprises a main receiver (300) and at least one auxiliary receiver,
   the main receiver (300) and at least one auxiliary receiver (302) are connected to function as a receiving unit, which the main receiver (300) controls by controlling means (216, 320),
   at least one auxiliary receiver (302) comprises means (312, 314, 316, 318, 322a, 322b, 322c, 322d) for supplying a signal received by it to processing by the main receiver and/or
   the terminal or the terminal unit comprises a main transmitter (600) and at least one auxiliary transmitter (602),
   the main transmitter (600) and at least one auxiliary transmitter (602) are connected to function as a transmitting unit, which the main transmitter (600) controls by controlling means (216, 620).

2. A terminal or a terminal unit according to claim 1, **characterized in that** the auxiliary receiver is implemented by an auxiliary receiver card to be inserted into the terminal.

3. A terminal or a terminal unit according to claim 1, **characterized in that** the main receiver and the auxiliary receiver are separate devices which are connected via an interface of the main receiver to function as a receiving unit by means of a radio link.

4. A terminal or a terminal unit according to claim 1, **characterized in that** the main receiver and the auxiliary receiver are separate devices which are connected via an interface of the main receiver to function as a receiving unit by means of a cable connection.

5. A terminal or a terminal unit according to claim 1, **characterized in that** the main receiver and the auxiliary receiver are separate devices which are connected via an interface of the main receiver to function as a receiving unit by means of an infrared link.

6. A terminal or a terminal unit according to claim 1, **characterized in that** the main receiver and the auxiliary receiver are separate devices which are connected via an interface of the main receiver to function as a receiving unit by means of a galvanic connection.

7. A terminal or a terminal unit according to claim 1, **characterized in that** the main receiver controls the reception frequency of the auxiliary receiver.

8. A terminal or a terminal unit according to claim 1, **characterized in that** the main receiver controls switching on and off of the auxiliary receiver.

9. A terminal or a terminal unit according to claim 1, **characterized in that** the main receiver controls transfer of a signal from the auxiliary receiver to the main receiver.

10. A terminal or a terminal unit according to claim 1, **characterized in that** the main receiver and the auxiliary receiver receive the same carrier wave frequency.

11. A terminal or a terminal unit according to claim 1, **characterized in that** the main receiver and the auxiliary receiver receive different carrier wave frequencies.

12. A terminal or a terminal unit according to claim 1, **characterized in that** the auxiliary transmitter is implemented by an auxiliary transmitter card to be inserted into the terminal.

13. A terminal or a terminal unit according to claim 1, **characterized in that** the main transmitter and the auxiliary transmitter are separate devices which are connected to function as a transmitting unit by means of a radio link.

14. A terminal or a terminal unit according to claim 1, **characterized in that** the main transmitter and the auxiliary transmitter are separate devices are connected to function as a transmitting unit by means of an infrared link.

15. A terminal or a terminal unit according to claim 1, **characterized in that** the main transmitter and the auxiliary transmitter are separate devices which are connected to function as a transmitting unit by means of a cable connection.

16. A terminal or a terminal unit according to claim 1, **characterized in that** the main transmitter and the auxiliary transmitter are separate devices which are connected to function as a transmitting unit by means of a galvanic connection.

17. A terminal or a terminal unit according to claim 1, **characterized in that** the main transmitter comprises means (216, 610, 620) for processing a signal transmitted by both the main transmitter and the auxiliary transmitter to maximize radio link performance.

18. A terminal or a terminal unit according to claim 1, **characterized in that** the main transmitter controls switching on and off of the auxiliary transmitter.

**19.** A terminal or a terminal unit according to claim 1, **characterized in that** the main transmitter controls the transmission power of the auxiliary transmitter.

**20.** A terminal or a terminal unit according to claim 1, **characterized in that** the main transmitter controls the transmission frequency of the auxiliary transmitter.

**21.** A terminal or a terminal unit according to claim 1, **characterized in that** the main transmitter and the auxiliary transmitter transmit at the same carrier wave frequency.

**22.** A terminal or a terminal unit according to claim 1, **characterized in that** the main transmitter and the auxiliary transmitter transmit at different carrier wave frequencies.

**23.** A terminal or a terminal unit according to claim 1, **characterized in that** the auxiliary receiver and/or the auxiliary transmitter have been integrated into the battery of the terminal.

**24.** A terminal or a terminal unit according to claim 1, **characterized in that** the auxiliary receiver and/or the auxiliary transmitter are integrated into the desktop stand of the terminal.

**25.** A terminal or a terminal unit according to claim 1, **characterized in that** the auxiliary receiver and/or the auxiliary transmitter are integrated into the car installation kit of the terminal.

**26.** A receiving unit of a terminal or a terminal unit suitable for a radio telecommunications system,
 **characterized in that**
 the receiving unit comprises a main receiver (300) and at least one auxiliary receiver (302),
 the main receiver (300) and at least one auxiliary receiver (302) are connected to function as a receiver unit, which the main receiver (300) controls by controlling means (216, 320),
 at least one auxiliary receiver (302) comprises means (312, 314, 316, 318, 322a, 322b, 322c, 322d) for supplying a signal received by it to processing by the main receiver.

**27.** A transmitting unit of a terminal or a terminal unit suitable for a radio telecommunications system,
 **characterized in that**
 the terminal or the terminal un it comprises a main transmitter (600) and at least one auxiliary transmitter (602),
 the main transmitter (600) and at least one auxiliary transmitter (602) are connected to function as a transmitting unit, which the main transmitter (600) controls by controlling means (216, 620).

**28.** A method for increasing the transmission rate in a radio telecommunications system or improving the quality of data transmission,
 **characterized by**
 (502) connecting a main receiver and at least one auxiliary receiver to function as a receiving unit, which the main receiver controls,
 (504) receiving a radio signal both by the main receiver and at least one auxiliary receiver,
 (506) supplying the signal received by at least one auxiliary receiver to the main receiver for processing, and/or
 (508) connecting the main transmitter and at least one auxiliary transmitter to function as a transmitting unit, which the main transmitter controls,
 (510) transmitting a radio signal both by the main transmitter and at least one auxiliary transmitter.

**29.** A method according to claim 28, **characterized in that** the auxiliary receiver is implemented by an auxiliary receiver card to be inserted into the terminal.

**30.** A method according to claim 28, **characterized in that** the main receiver and the auxiliary receiver are separate devices which are connected via an interface of the main receiver to function as a receiving unit by means of a radio link.

**31.** A method according to claim 28, **characterized in that** the main receiver and the auxiliary receiver are separate devices which are connected via an interface of the main receiver to function as a receiving unit by means of a cable connection.

**32.** A method according to claim 28, **characterized in that** the main receiver and the auxiliary receiver are separate devices which are connected via an interface of the main receiver to function as a receiving unit by means of an infrared link.

**33.** A method according to claim 28, **characterized in that** the main receiver and the auxiliary receiver are separate devices which are connected via an interface of the main receiver to function as a receiving unit by means of a galvanic connection.

**34.** A method according to claim 28, **characterized in that** the main receiver controls the reception frequency of the auxiliary receiver.

**35.** A method according to claim 28, **characterized in that** the main receiver controls switching on and off of the auxiliary receiver.

**36.** A method according to claim 28, **characterized in that** the main receiver controls signal transfer from the auxiliary receiver to the main receiver.

**37.** A method according to claim 28, **characterized in that** the main receiver and the auxiliary receiver receive the same carrier wave frequency.

**38.** A method according to claim 28, **characterized in that** the main receiver and the auxiliary receiver receive different carrier wave frequencies.

**39.** A method according to claim 28, **characterized in that** the auxiliary transmitter is implemented by an auxiliary transmitter card to be inserted into the terminal.

**40.** A method according to claim 28, **characterized in that** the main transmitter and the auxiliary transmitter are separate devices which are connected to function as a transmitting unit by means of a radio link.

**41.** A method according to claim 28, **characterized in that** the main transmitter and the auxiliary transmitter are separate devices which are connected to function as a transmitting unit by means of an infrared link.

**42.** A method according to claim 28, **characterized in that** the main transmitter and the auxiliary transmitter are separate devices which are connected to function as a transmitting unit by means of a cable connection.

**43.** A method according to claim 28, **characterized in that** the main transmitter and the auxiliary transmitter are separate devices which are connected to function as a transmitting unit by means of a galvanic connection.

**44.** A method according to claim 28, **characterized in that** the main transmitter comprises means (216, 610, 620) for processing the signal transmitted by both the main transmitter and the auxiliary transmitter to maximize radio link performance.

**45.** A method according to claim 28, **characterized in that** the main transmitter controls switching on and off of the auxiliary transmitter.

**46.** A method according to claim 28, **characterized in that** the main transmitter controls the transmission power of the auxiliary transmitter.

**47.** A method according to claim 28, **characterized in that** the main transmitter controls the transmission frequency of the auxiliary transmitter.

**48.** A method according to claim 28, **characterized in that** the main transmitter and the auxiliary transmitter transmit on the same carrier wave frequency.

**49.** A method according to claim 28, **characterized in that** the main transmitter and the auxiliary transmitter transmit on different carrier wave frequencies.

**50.** A method according to claim 28, **characterized in that** the auxiliary receiver and/or the auxiliary transmitter are integrated into the battery of the terminal.

**51.** A method according to claim 28, **characterized in that** the auxiliary receiver and/or the auxiliary transmitter are integrated into the desktop stand of the terminal.

**52.** A method according to claim 28, **characterized in that** the auxiliary receiver and/or the auxiliary transmitter are integrated into the car installation kit of the terminal.

Fig. 1

Fig. 3

Fig. 2

Fig. 6

PRIOR ART

Fig. 4

Fig. 5